# FASCICULE DE BREVET EUROPEEN

(11) **EP 2 329 197 B1**
(45) Date de publication et mention de la délivrance du brevet: **17.10.2018**
(21) Numéro de dépôt: 09782411.4
(22) Date de dépôt: 31.08.2009
(51) Int. Cl.: F23R 3/20, F23R 3/60

(54) **DISPOSITIF DE FIXATION D'UN BRAS ACCROCHE FLAMMES SUR UN CARTER DE POST-COMBUSTION**
VORRICHTUNG ZUR BEFESTIGUNG EINES FLAMMHALTERARMS AN EINEM NACHBRENNERGEHÄUSE
DEVICE FOR MOUNTING A FLAME-HOLDER ARM ON AN AFTERBURNER CASING

(30) Priorité: 01.09.2008 FR 0855856
(43) Date de publication de la demande: 08.06.2011
(73) Titulaire: Safran Aircraft Engines, 75015 Paris (FR)
(72) Inventeur: HERNANDEZ, Didier, Hyppolyte, F-77220 Quiers (FR); BERDOU, Caroline, Jacqueline, Denise, F-91120 Palaiseau (FR); BUNEL, Jacques, Marcel, Arthur, F-94200 Thiais (FR); VUILLEMENOT, Yann, François, Jean-Claude, 92350 LE PLESSIS-ROBINSON (FR)
(74) Mandataire: Gevers & Orès
(86) Numéro de dépôt international: PCT/EP2009/061224
(87) Numéro de publication internationale: WO 2010/023319

(56) Documents cités:
- EP-A- 1 229 290
- EP-A- 1 803 999
- FR-A- 2 699 226
- FR-A- 2 709 342
- US-A- 5 497 616

## Description

Le domaine de la présente invention est celui des turboréacteurs à double flux, et plus particulièrement des dispositifs de post-combustion de tels réacteurs.

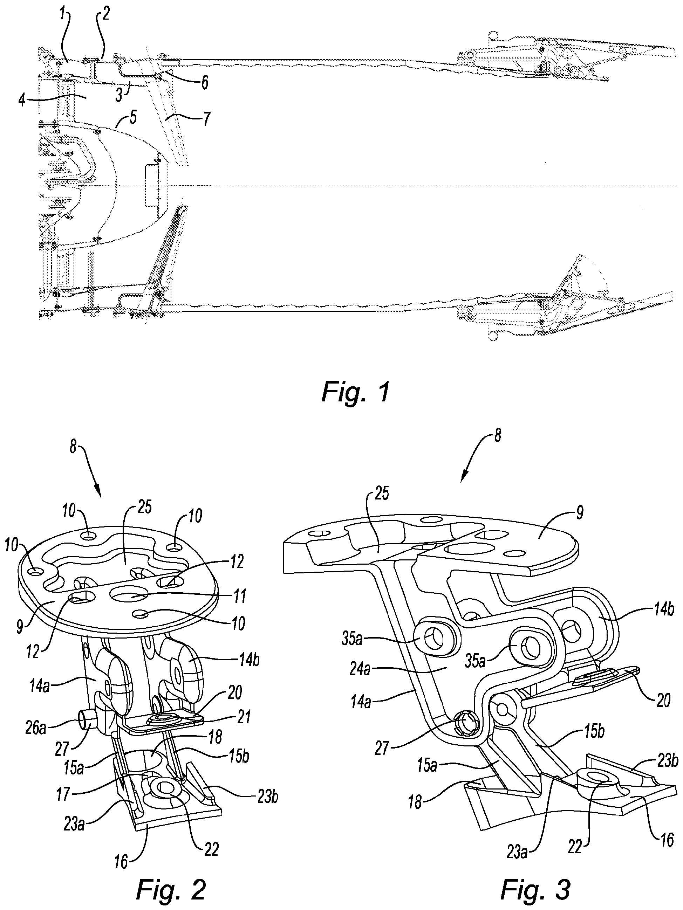

Dans un turboréacteur double flux à post-combustion, avec un arrière-corps du type de celui illustré sur la figure 1, le flux d'air est tout d'abord aspiré par un compresseur basse pression. Une première partie de ce flux d'air en sortie du compresseur basse pression alimente un compresseur haute pression, tandis qu'une seconde partie passe dans un premier passage 1 défini entre un carter annulaire externe 2 et un premier carter annulaire interne 3. Le flux d'air comprimé par le compresseur haute pression alimente une chambre de combustion qui alimente elle-même en gaz de combustion une turbine haute pression suivie d'une turbine basse pression et dont la sortie passe par un second passage 4 défini entre le premier carter annulaire interne 3 (ou tôle de confluence) et un second carter annulaire interne 5 (ou cône d'échappement).

Les gaz de combustion qui alimentent le second passage 4 présentent une température élevée et constituent ce que l'on appelle un flux primaire (ou flux chaud). L'air qui alimente le premier passage 1 présente une température sensiblement inférieure à celle du flux primaire et constitue ce que l'on appelle un flux secondaire (ou flux froid).

En aval de la sortie de turbine il est possible de réaliser une augmentation de la poussée par l'injection d'une quantité supplémentaire de carburant dans les flux primaire et secondaire, avec sa combustion au sein d'un canal de post-combustion. Ce système comporte principalement un ensemble de bras 7, dit bras accroche-flammes, et un anneau-brûleur 6. L'anneau brûleur 6 est porté par les bras 7 et placé dans le flux secondaire, au voisinage de la tôle de confluence 3.

Une partie de l'injection s'effectue à l'aide de l'anneau brûleur 6 qui permet d'injecter de façon homogène une partie du carburant et de stabiliser la flamme.

Par ailleurs chaque bras renferme un injecteur de carburant, qui injecte, dans le flux primaire, l'autre partie du carburant de post-combustion.

Le bras est également équipé d'un tube de ventilation dont le rôle est de refroidir d'une part les parois métalliques du bras baignées dans le flux primaire, et d'autre part l'injecteur avec de l'air provenant directement du flux froid.

L'ensemble injecteur-tube est lui-même protégé du rayonnement de la flamme par une autre pièce métallique, l'écran de protection thermique.

Dans l'art antérieur les bras 7 étaient initialement réalisés en matériau métallique et issus de fonderie. Cette configuration présentait l'inconvénient de devoir assurer leur refroidissement. Dans des réalisations plus récentes ils ont été remplacés par des pièces en matériau composite à matrice céramique (CMC) qui ont l'avantage d'être plus légers et de mieux résister aux hautes températures. Il est alors possible de se passer des systèmes de ventilation auxquels sont condamnés les systèmes métalliques.

En revanche ces matériaux présentent des caractéristiques de dilatation thermique très différentes de celles des matériaux constituant les carters du moteur sur lesquels ils sont fixés. Il est donc nécessaire de prendre en compte les effets de ces différences dans la façon dont les bras 7 sont fixés sur la structure du moteur, notamment au niveau du carter externe 2.

Plusieurs dispositifs ont été proposés pour fixer le bras 7, que ceux-ci soient en matériau métallique ou en matériau composite. Ils sont décrits dans les documents FR2699226, FR2699227 ou bien encore dans les documents US 5,103,638, GB 2 295 214, US 5,022,805 ou US 5,090,198.

Le document FR2865502 de la demanderesse décrit, quant à lui, un bras monobloc accroche-flammes 7 réalisé en matériau composite (composite à matrice céramique, ou CMC) pour résister aux hautes températures, qui est fixé directement sur le carter externe 2. Ce bras a la forme de deux parois solidaires liées en partie basse par une gorge, avec en partie haute une échancrure ouverte sur le flux froid et deux brides recourbées. La fixation est réalisée par ces deux brides qui sont boulonnées sur le carter, ce qui nécessite lors de la fabrication du bras le pliage des fibres du matériau composite pour leur donner la forme appropriée. Comme indiqué précédemment ces brides réalisées en matériau composite n'ont pas le même coefficient de dilatation que le métal du carter. En conséquence d'une part, la grande différence de dilatation entre le bras CMC et le carter métallique peut engendrer une perte du serrage à chaud entre les 2 pièces, et d'autre part, le fait de venir fixer les bras CMC sur le carter génère des contraintes dans les brides des bras. Les conséquences de ces contraintes sont de plus amplifiées par la fragilité des brides dans cette zone due au pliage des fibres CMC. Ces contraintes sont bien évidemment préjudiciables à leur durée de vie.

Le document EP1803999 de la demanderesse a proposé une solution tendant à résoudre ce problème de contraintes en interposant un support de bras métallique entre le bras et le carter, c'est à dire en fixant le bras sur le support et en fixant le support sur le carter externe 2. Mais les pattes latérales du support, étant brasées à la platine supérieure du support en interface avec le carter, sont soumises à d'importantes contraintes thermiques et à des efforts aérodynamiques importants. La durée de vie des bras dans cette configuration reste alors insuffisante du fait de la forte sollicitation du support au niveau des brasures.

L'invention a pour but d'améliorer la situation en proposant des bras accroche-flammes ayant une meilleure tenue mécanique.

A cet effet, l'invention a pour objet un dispositif accroche-flammes pour post-combustion d'un turboréacteur à double flux selon l'objet de la revendication 1.

La suppression du pliage des fibres procure une amélioration sensible de la durée de vie des bras accroches-flammes. Les cavités ont pour effet de participer à la régulation de la carburation de la post-combustion.

Selon des modes de réalisation particuliers :
- lesdits moyens de fixation sont des boulons s'interfaçant avec des perçages pratiqués dans lesdites parties hautes, des rondelles élastiques étant positionnées entre la tête desdits boulons et les faces d'appui de ces têtes sur lesdites parties hautes, de façon à maintenir le serrage malgré les différences de dilatation du matériau composite et du matériau métallique,
- des bossages assurent la traversée étanche des cavités des mâts par les boulons de fixation du bras sur le support de bras,
- un trou de prise de pression est percé dans la partie basse de chacun des mâts pour assurer l'alimentation en air des dites cavités, un orifice de sortie de l'air étant ménagé dans la partie haute dudit dispositif au niveau du carter externe,
- les trous de prise de pression sont équipés d'une bague destinée à assurer l'étanchéité du passage d'air entre l'extérieur du bras accroche-flammes et le support de bras,
- les parties hautes des parois comportent un trou positionné, après montage, en regard des trous de prise de pression percés dans la partie basse des mâts du support,
- la platine supérieure comporte un perçage pour le passage d'un injecteur de carburant,
- l'injecteur est fixé sur le carter externe et guidé en partie basse par une semelle de guidage fixée à un tube de ventilation, lui-même lié en partie haute par une liaison rotulante au niveau du support de bras,
- le support de bras comporte une platine intermédiaire et une platine inférieure aptes à supporter un anneau-brûleur du système de post-combustion,
- la platine inférieure supporte la face interne dudit anneau-brûleur au moyen de faces d'appui dont la surface globale est inférieure à 25% de celle de la platine inférieure,
- la platine inférieure comporte un trou de passage pour l'injecteur et un trou de passage cylindrique définissant une liaison rotulante entre le tube de ventilation et le support de bras,
- les mâts latéraux d'une part, et les parties hautes d'autre part, divergent l'un de l'autre par rapport au plan de symétrie du support de bras,
- l'angle de divergence est inférieur à 7° ; cet angle de divergence a pour effet de limiter le débattement axial dû au positionnement relatif du bras par rapport au support,
- les bossages sont oblongs de manière à présenter suffisamment de matière pour permettre des contre-perçages dans les mâts en face des perçages pratiqués dans les parties hautes du bras,

L'invention revendique également un arrière-corps d'un turboréacteur double flux à post-combustion comportant un tel dispositif accroche-flammes. Elle revendique enfin un turboréacteur double flux à post-combustion comportant un tel arrière-corps.

L'invention sera mieux comprise, et d'autres buts, détails, caractéristiques et avantages de celle-ci apparaîtront plus clairement au cours de la description explicative détaillée qui va suivre, de plusieurs modes de réalisation de l'invention donnés à titre d'exemples purement illustratifs et non limitatifs, en référence aux dessins schématiques annexés.

Sur ces dessins :
- la figure 1 est une vue en coupe d'un arrière corps de turboréacteur à double flux avec post-combustion ;
- la figure 2 est une vue en perspective d'un support de bras accroche-flammes selon un mode de réalisation de l'invention ;
- la figure 3 une vue en perspective et en coupe d'un support de bras accroche-flammes selon un mode de réalisation de l'invention ;
- la figure 4 est une vue de dessus en coupe d'un support de bras et d'un bras accroche-flammes selon un mode de réalisation de l'invention ;
- la figure 5 est une demi coupe en perspective d'un support de bras et d'un bras accroche-flammes selon un mode de réalisation de l'invention, assemblés dans un système de post-combustion d'un turboréacteur à double flux ;
- la figure 6 est une vue en perspective d'un support de bras et d'un bras accroche-flammes selon un mode de réalisation de l'invention, en position assemblés ; et
- la figure 7 est une vue en perspective d'un support de bras et d'un bras accroche-flammes selon un mode de réalisation de l'invention, assemblés et intégrés au module de réchauffe constitué par le carter externe, la tôle de confluence et l'anneau brûleur.

Dans la suite du texte les mots « externe » et « interne » sont utilisés en référence à la veine d'air, externe se rapportant à l'extérieur du moteur et interne à son axe de symétrie.

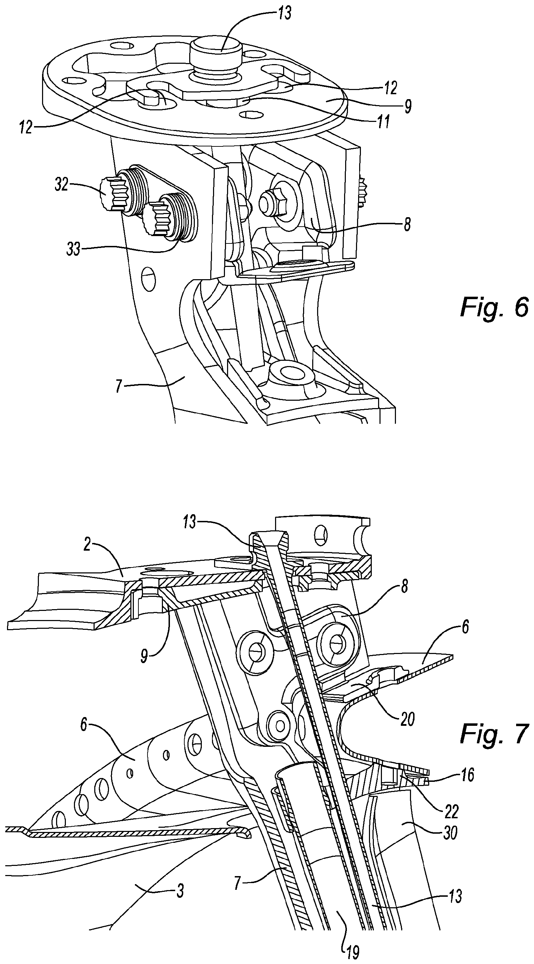

En se référant aux figures 2 et 3, on voit un support de bras 8 comportant une platine supérieure 9 destinée à être fixée sur le carter externe 2 au moyen de quatre vis-écrous, non représentées, passant par des alésages 10. La platine supérieure 9 comporte également un perçage 11 par lequel passe un injecteur de carburant et deux trous 12 pour le logement des têtes des vis, dites à tête platée, destinées à assurer la fixation de la tête de l'injecteur, comme on peut le voir sur la figure 6.

De la platine supérieure 9 s'étendent deux mâts latéraux 14a et 14b, représentés ici, sans que cette forme soit impérative, sous la forme d'un T basculé de 90°, la branche supérieure du T se développant à partir de la platine supérieure 9 et servant à son autre extrémité de support à deux branches 15a et 15b porteuses d'une platine inférieure 16. La platine inférieure comporte elle aussi deux perçages 17 et 18 dans lesquels passent respectivement l'injecteur de carburant et un tube de ventilation, via une liaison rotulante permettant le libre déplacement du tube. Sur la branche centrale du T de chacun des mâts latéraux 14a et 14b est fixée une platine intermédiaire 20 qui, avec la platine inférieure 16, a pour objet de servir de support à un anneau brûleur 6. A cet effet la platine intermédiaire 20 comporte un perçage 21 dans lequel passe un moyen de fixation, non représenté, de la partie externe de l'anneau brûleur 6 tandis que la platine inférieure 16 comporte un perçage 22 dans lequel passe un moyen de fixation, non représenté, de la partie interne de l'anneau brûleur 6. La platine inférieure 16 comporte en outre deux faces d'appui 23a et 23b qui constituent avec la partie supérieure du perçage 22, une face d'appui sur laquelle repose la partie interne de l'anneau brûleur 6. Afin de minimiser les transferts de chaleur vers le support de bras 8 de l'anneau brûleur 6, dont la partie interne est située dans le flux chaud, les surfaces de contact entre l'anneau brûleur et la platine inférieure 16 sont réduites au maximum ; en conséquence la surface des faces d'appui 23a et 23b et du perçage 22 représentent au plus 25% de la surface de la platine inférieure 16.

En référence toujours aux figures 2 et 3 on voit les deux mâts latéraux 14a et 14b dont l'intérieur est constitué chacun par une cavité creuse 24a et 24b qui débouche, en direction du carter externe, dans une cavité supérieure 25 creusée dans la platine supérieure 9. Un trou de prise de pression 26 est percé dans la partie basse de chacun des mâts pour assurer l'alimentation en air de cette cavité. L'air circule ainsi dans les cavités 24 et 25 puis est évacué à l'extérieur du dispositif d'accroche-flammes à travers le carter externe 2. Les deux trous de prise de pression 26a et 26b peuvent, dans un mode particulier de réalisation représenté sur les figures 2 et 3, être équipés d'une bague 27 destinée à traverser le bras accroche-flammes 7 pour assurer l'étanchéité du passage d'air entre l'extérieur du bras accroche-flammes 7 et le support de bras 8. Cette bague a la forme d'une douille qui prend appui de façon étanche sur la face intérieure du mât correspondant et qui traverse le mât 14 du bras 7 dans toute son épaisseur. La partie de la bague 27 interne à la cavité 24 comporte des trous sur sa circonférence pour laisser l'air en provenance du flux froid pénétrer dans ladite cavité.

Au sein de chaque cavité deux bossages oblongs 35 assurent la traversée étanche des moyens de fixation du bras accroche-flammes 7 sur le support de bras 8. Ils garantissent également la tenue mécanique des mâts 14 lors du serrage du bras 7 sur le support de bras 8, en empêchant l'écrasement de la cavité 24.

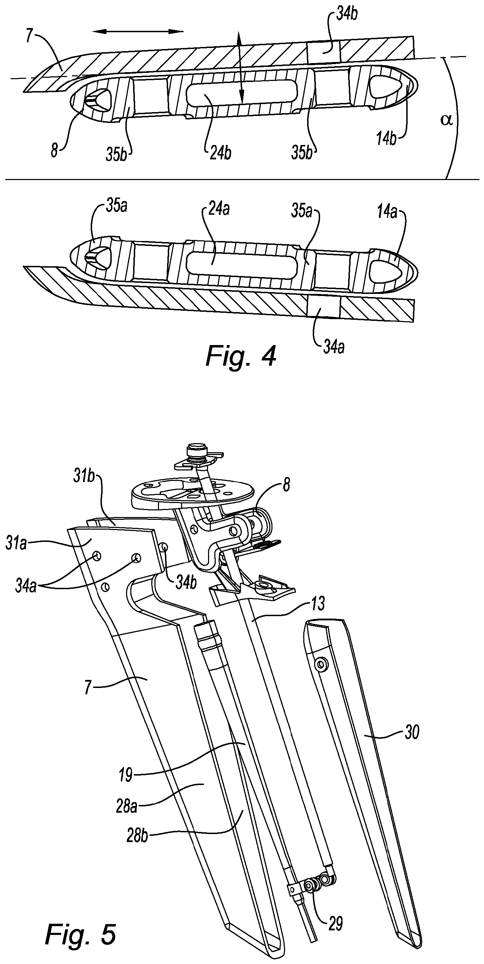

En se référant à la figure 4 on voit que les deux mâts 14a et 14b ne sont pas positionnés parallèlement l'un à l'autre, mais qu'ils divergent tous deux d'un angle α par rapport au plan de symétrie du support 8. Cet angle α correspond à l'angle que font les deux ailes latérales du bras accroche-flammes 7, qui présentent un profil divergent pour répondre au besoin de démoulage de la pièce en matériau composite lors de sa fabrication. L'angle de dépouille correspondant α est typiquement inférieur à 7°, et de préférence voisin de 3°.

L'existence de cet angle de dépouille fait que le positionnement relatif du support de bras à l'intérieur du V formé par les parois latérales du bras accroche-flammes 7 est prédéterminé car il correspond à la position de butée du support de bras 8 à l'intérieur du bras 7. Mais les tolérances de perçage des trous 34 dans le CMC sont trop importantes pour que des trous 34 pratiqués dans les parois latérales du bras accroche-flammes pour le fixer au support de bras 8 se trouvent exactement en face de trous qui seraient préalablement pratiqués dans les mâts du support de bras. Afin de prendre en compte cette imprécision les bossages 35 au niveau des trous de fixation du bras 7 sont oblongs dans le sens de l'axe du moteur, avec le grand côté orienté vers le fond du V du bras 7 ; ils sont en outre constitués de suffisamment de matière pour qu'un contre perçage des mâts du support puisse être réalisé, lors du montage, en vis-à-vis des trous 34 pratiqués dans les parois latérales du bras accroche-flammes 7.

En se référant maintenant à la figure 5, on voit un bras accroche-flammes 7 réalisé sous la forme d'une structure monobloc en matériau composite. Il est préférentiellement réalisé en composite à matrice céramique (CMC) qui est particulièrement résistant aux températures élevées et qui présente une masse peu élevée comparativement aux matériaux métalliques. A titre d'exemple la structure est réalisée à partir d'une préforme en fibres, notamment de carbure de silicium ou de carbone, imprégnée d'une matrice céramique en phase liquide ou gazeuse.

Le bras accroche-flammes 7 comporte deux parois 28a et 28b sensiblement symétriques qui se rejoignent sur un côté longitudinal de manière à définir une gorge dont le profil, dans une section transverse, est sensiblement en V. Comme indiqué précédemment ces deux parois divergent l'une par rapport à l'autre d'un angle α. Ces deux parois se rejoignent, à leur extrémité interne, c'est-à-dire orientée vers le centre de la veine gazeuse, pour former un pied, qui a la forme d'un biseau pour se retrouver dans l'axe du flux primaire et favoriser l'écoulement de celui-ci. A son autre extrémité chaque paroi 28a et 28b comporte une découpe, adaptée à l'insertion de l'anneau brûleur 6, qui est alignée, après montage, avec la platine intermédiaire 20 et avec les faces d'appui 22, 23a et 23b de la platine inférieure 16. Les parois sont en outre évasées en direction du carter externe 2, pour leur partie haute, c'est-à-dire la partie située dans le flux secondaire, au dessus des découpes, de façon à envelopper le support de bras 8.

Les parties hautes 31a et 31b de chacune des parois sont sensiblement planes et positionnées en regard l'une de l'autre. Elles sont par ailleurs percées chacune de trois trous, deux trous 34 étant utilisés pour la fixation du bras 7 sur le support de bras 8, et le troisième étant aligné avec le trou de prise de pression 26a ou 26b, ou avec la bague d'étanchéité 27, d'un des mâts du support de bras 8 pour alimenter la cavité 24a ou 24b correspondante.

Sur la figure 5 on voit également le tube de ventilation 19 et l'injecteur de carburant 13. Le tube de ventilation 19 est fixé en partie basse sur une semelle de guidage 29, sur laquelle est fixé l'injecteur 13, et est guidé en partie haute par un centrage sphérique contenu dans un passage cylindrique de la platine inférieure du support. On voit enfin un écran de protection thermique 30, qui reproduit la forme du bras accroche-flammes 7 et qui s'insère dans celui-ci afin de protéger l'injecteur de carburant 13 et le tube de ventilation 19 du rayonnement de la flamme de la post-combustion et ainsi d'empêcher le phénomène de cokéfaction dans l'injecteur.

La figure 6 montre le bras accroche-flammes 7 monté sur son support de bras 8. L'ensemble est maintenu en position par quatre boulons 32 qui traversent le bras 7 en passant à travers les deux trous 34a et 34b pratiqués chacun dans les parties hautes 31a, 31b des parois 28a et 28b et qui traversent le support de bras 8 en passant à travers les contre trous pratiqués dans les bossages 35a et 35b des mâts 14a et 14b. Une contreplaque est positionnée entre la tête de chaque vis et la paroi correspondante du bras 7 pour, de façon connue, répartir les efforts de serrage et protéger le matériau CMC en compression lors du serrage des boulons. Entre la tête de la vis et la contreplaque sont en outre insérées des rondelles élastiques qui maintiennent le serrage malgré les différences de dilatation qu'il y a, à chaud et à froid, entre le bras 7 et le boulon 32.

L'injecteur 13 est positionné à l'intérieur du bras accroche-flammes 7 et comporte à son extrémité supérieure une platine destinée à assurer sa fixation sur le carter externe 2. Cette platine comporte deux perçages ouverts à travers lesquels passe le corps d'une vis dont la tête est placée dans les trous 12 pratiqués dans la platine supérieure 9 du support de bras 8, et qui permet le serrage de la tête de l'injecteur 13 sur le carter externe 2.

La figure 7 montre l'ensemble du bras accroche-flammes 7 et du support de bras 8 en position dans l'arrière corps d'un turboréacteur double flux à post-combustion. L'anneau brûleur 6 est positionné dans la découpe pratiquée dans le bras accroche-flammes 7 et prend appui sur le support de bras 8 par l'intermédiaire, d'une part de la platine intermédiaire 20 et, d'autre part, des faces d'appui 23a et 23b et de la partie supérieure du perçage 22 de la platine inférieure 16.

Par rapport au dispositif accroche-flammes de l'art antérieur, représenté par la demande de brevet EP1803999, la présente invention présente les avantages suivants :
- les cavités creuses 24a et 24b des mâts 14a et 14b et la cavité 25 de la platine supérieure 9 constituent des chambres de tranquillisation pour l'air prélevé dans le flux secondaire au niveau des points de prise de pression 26a et 26b. La valeur de la pression de cet air lorsqu'il sort de la cavité supérieure 25 correspond précisément à la pression statique dans le flux secondaire au niveau des accroches-flammes et peut être utilisée par le système de régulation de la post-combustion,
- le bras accroche-flammes 7 est en appui contre le support de bras 8 dans une position qui correspond à la venue en butée du support de bras dans le fond du V du bras accroche-flammes. Puisque les contre trous dans les mâts du support de bras sont percés lorsque les deux pièces sont dans cette position, la liaison des deux pièces par les boulons 32 s'effectue sans les précontraintes liées à la mise en position relative des deux pièces,
- les efforts appliqués aux bras accroche-flammes 7 sont transmis au carter externe 2 exclusivement par des pièces métalliques, ce qui élimine les risques d'endommagement des pièces en matériaux composites,
- la fabrication du bras 7 et celle du support de bras 8 peuvent être lancées en parallèle, leur appariement se faisant uniquement lors de la réalisation des contre perçages dans les mâts du support de bras 8,
- la forme du bras 7 est simplifiée, ce qui facilite sa réalisation,
- la face interne de la platine supérieure 9 est dégagée et n'est plus en contact avec les brides du bras 7. Il est donc possible d'y positionner quatre alésages 10, au lieu de deux, pour la fixation de la platine supérieure et ainsi obtenir une meilleure tenue de celle-ci sur le carter externe 2,
- le bras 7 est démontable du support de bras 8, ce qui permet leur désassemblage et, par exemple, le remplacement du tube de ventilation 19 sans avoir à détruire des brasures sur l'une de ces deux pièces.

## Revendications

1. Dispositif accroche-flammes pour post-combustion d'un turboréacteur à double flux, ledit turboréacteur comprenant des premier (3) et second (5) carters annulaires internes, définissant un passage (4) pour un flux primaire, et un carter annulaire externe (2) définissant avec ledit premier carter annulaire interne (3) un passage (1) pour un flux secondaire, le dispositif comportant au moins un support de bras (8) en matériau métallique destiné à être fixé audit carter externe (2) par l'intermédiaire d'une platine supérieure (9) et au moins un bras accroche-flammes (7) constitué par une structure monobloc en matériau composite comportant deux parois solidaires (28a, 28b) agencées de manière à définir une gorge présentant un profil sensiblement en V, lesdites parois portant sur leur partie haute destinée à être située dans le flux secondaire (31a, 31b) des moyens de fixation (34a, 34b) sur ledit support de bras (8), lesdites parties hautes (31a, 31b) étant planes et positionnées en regard l'une de l'autre, le support de bras (8) comportant deux mâts latéraux (14a, 14b), le dispositif étant **caractérisé en ce que** l'intérieur de chacun des deux mâts latéraux est constitué par une cavité creuse (24a, 24b), qui débouche, en direction du carter externe, dans une cavité supérieure (25) creusée dans la platine supérieure (9).

2. Dispositif accroche-flammes pour post-combustion selon la revendication 1 dans lequel lesdits moyens de fixation sont des boulons (32) s'interfaçant avec des perçages (34a, 34b) pratiqués dans lesdites parties hautes, des rondelles élastiques (33) étant positionnées entre la tête desdits boulons et les faces d'appui de ces têtes sur lesdites parties hautes (31a, 31b), de façon à maintenir le serrage malgré les différences de dilatation du matériau composite et du matériau métallique.

3. Dispositif accroche-flammes pour post-combustion selon la revendication 2 dans lequel des bossages (35a, 35b) assurent la traversée étanche des cavités (24a, 24b) des mâts (14a, 14b) par les boulons (32) de fixation du bras (7) sur le support de bras (8).

4. Dispositif accroche-flammes pour post-combustion selon l'une des revendications 1 ou 3 dans lequel au moins un trou de prise de pression (26a, 26b) est percé dans la partie basse de chacun des mâts pour assurer l'alimentation en air des dites cavités, un orifice de sortie de l'air étant ménagé dans la partie haute dudit dispositif au niveau du carter externe (2).

5. Dispositif accroche-flammes pour post-combustion selon la revendication 4 dans lequel les trous de prise de pression (26a, 26b) sont équipés d'une bague (27) destinée à assurer l'étanchéité du passage d'air entre l'extérieur du bras accroche-flammes (7) et le support de bras (8).

6. Dispositif accroche-flammes pour post-combustion selon l'une des revendications 4 ou 5 dans lequel les parties hautes (31a, 31b) des parois (28a, 28b) comportent un trou positionné, après montage, en regard des trous de prise de pression (26a, 26b) percés dans la partie basse des mâts (14a, 14b).

7. Dispositif accroche-flammes pour post-combustion selon l'une des revendications 1 à 6 dans lequel la platine supérieure (9) comporte un perçage (11) pour le passage d'un injecteur de carburant (13).

8. Dispositif accroche-flammes pour post-combustion selon la revendication 7 dans lequel l'injecteur (13) est fixé sur le carter externe (2) et guidé en partie basse par une semelle de guidage (29) fixée à un tube de ventilation (19), lui-même lié en partie haute par une liaison rotulante au niveau du support de bras (8).

9. Dispositif accroche-flammes pour post-combustion selon l'une des revendications 1 à 8 dans lequel le support de bras (8) comporte une platine intermédiaire (20) et une platine inférieure (16) aptes à supporter un anneau-brûleur (6) du système de post-combustion.

10. Dispositif accroche-flammes pour post-combustion selon la revendication 9 dans lequel la platine inférieure (16) supporte la face interne dudit anneau-brûleur au moyen de faces d'appui (23a, 23b, 22) dont la surface globale est inférieure à 25% de celle de la platine inférieure.

11. Dispositif accroche-flammes pour post-combustion selon l'une des revendications 9 ou 10 dans lequel la platine inférieure (16) comporte un trou de passage pour l'injecteur (13) et un trou de passage cylindrique définissant une liaison rotulante entre le tube de ventilation (19) et le support de bras (8).

12. Dispositif accroche-flammes pour post-combustion selon l'une des revendications 1 à 11, en combinaison avec la revendication 3, dans lequel les mâts latéraux (14a, 14b) d'une part, et les parties hautes (31a, 31b) d'autre part, divergent l'un de l'autre par rapport au plan de symétrie du support de bras (8).

13. Dispositif accroche-flammes pour post-combustion selon la revendication 12 dans lequel l'angle de divergence est inférieur à 7°.

14. Dispositif accroche-flammes pour post-combustion selon l'une des revendications 12 ou 13, en combinaison avec la revendication 4, dans lequel les bossages (35a, 35b) sont oblongs de manière à présenter suffisamment de matière pour permettre des contre-perçages dans les mâts (14a, 14b) en face des perçages (34a, 34b) pratiqués dans les parties hautes (31a, 31b) du bras (7).

15. Arrière-corps d'un turboréacteur double flux à post-combustion comportant un dispositif accroche-flammes selon l'une des revendications précédentes.

16. Turboréacteur double flux à post-combustion comportant un arrière-corps selon la revendication 15.

## Patentansprüche

1. Flammhaltervorrichtung für Nachverbrennung eines Doppelstrom-Turbostrahltriebwerks, wobei das Turbostrahltriebwerk ein erstes (3) und zweites (5) inneres ringförmiges Gehäuse umfasst, die einen Durchgang (4) für einen primären Strom definieren, und ein äußeres ringförmiges Gehäuse (2), das mit dem primären inneren ringförmigen Gehäuse (3) einen Durchgang (1) für einen sekundären Strom definiert, wobei die Vorrichtung mindestens einen Armhalter (8) aus metallischem Material aufweist, der bestimmt ist, an dem äußeren Gehäuse (2) mittels einer oberen Platte (9) befestigt zu sein, und mindestens einen Flammhalterarm (7), gebildet von einer einstückigen Struktur aus Verbundmaterial, aufweisend zwei fest verbundene Wände (28a, 28b), die derart angeordnet sind, dass sie eine Nut mit etwa einem V-Profil definieren, wobei die Wände auf ihrem oberen Teil, der bestimmt ist, sich in dem sekundären Strom (31a, 31b) zu befinden, Befestigungsmittel (34a, 34b) auf dem Armhalter (8) tragen, wobei die oberen Teile (31a, 31b) eben und gegenüber positioniert sind, wobei der Armhalter (8) zwei seitliche Masten (14a, 14b) aufweist, wobei die Vorrichtung **dadurch gekennzeichnet ist, dass** das Innere jedes der zwei seitlichen Masten von einem Hohlraum (24a, 24b) gebildet ist, der in Richtung des äußeren Gehäuses in einen oberen Hohlraum (25) ausmündet, der in der oberen Platte (9) ausgearbeitet ist.

2. Flammhaltervorrichtung für Nachverbrennung nach Anspruch 1, wobei die Befestigungsmittel Bolzen (32) sind, die mit in den oberen Teilen ausgebildeten Bohrungen (34a, 34b) Schnittstellen bilden, wobei elastische Scheiben (33) zwischen dem Kopf der Bolzen und den Auflageflächen dieser Köpfe auf den oberen Teilen (31a, 31b) derart positioniert sind, dass die Spannung trotz der Ausdehnungsunterschiede des Verbundmaterials und des metallischen Materials gehalten wird.

3. Flammhaltervorrichtung für Nachverbrennung nach Anspruch 2, wobei Vorsprünge (35a, 35b) die dichte Durchquerung der Hohlräume (24a, 24b) der Masten (14a, 14b) mittels der Befestigungsbolzen (32) des Arms (7) auf dem Armhalter (8) sichern.

4. Flammhaltervorrichtung für Nachverbrennung nach einem der Ansprüche 1 oder 3, wobei mindestens ein Druckaufnahmeloch (26a, 26b) in den unteren Teil jedes der Masten gebohrt ist, um die Luftversorgung der Hohlräume zu sichern, wobei eine Luftausgangsöffnung im oberen Teil der Vorrichtung im Bereich des äußeren Gehäuses (2) eingerichtet ist.

5. Flammhaltervorrichtung für Nachverbrennung nach Anspruch 4, wobei die Druckaufnahmelöcher (26a, 26b) mit einem Ring (27) ausgestattet sind, der bestimmt ist, die Dichtigkeit des Luftdurchgangs zwischen außerhalb des Flammhalterarms (7) und dem Armhalter (8) zu sichern.

6. Flammhaltervorrichtung für Nachverbrennung nach einem der Ansprüche 4 oder 5, wobei die oberen Teile (31a, 31b) der Wände (28a, 28b) ein Loch aufweisen, das nach der Montage gegenüber den Druckaufnahmelöchern (26a, 26b) positioniert ist, die im unteren Teil der Masten (14a, 14b) gebohrt sind.

7. Flammhaltervorrichtung für Nachverbrennung nach einem der Ansprüche 1 bis 6, wobei die obere Platte (9) eine Bohrung (11) für den Durchgang einer Kraftstoffeinspritzung (13) aufweist.

8. Flammhaltervorrichtung für Nachverbrennung nach Anspruch 7, wobei die Einspritzung (13) auf dem äußeren Gehäuse (2) befestigt ist und im unteren Teil von einer Führungssohle (29) geführt wird, die an einem Lüftungsrohr (19) befestigt ist, das selbst im oberen Teil mittels einer Kugelgelenkverbindung im Bereich des Armhalters (8) verbunden ist.

9. Flammhaltervorrichtung für Nachverbrennung nach einem der Ansprüche 1 bis 8, wobei der Armhalter (8) eine Zwischenplatte (20) und eine untere Platte (16) aufweist, die imstande sind, einen Brennerring (6) des Nachverbrennungssystems zu halten.

10. Flammhaltervorrichtung für Nachverbrennung nach Anspruch 9, wobei die untere Platte (16) die innere Fläche des Brennerrings mit Hilfe von Auflageflächen (23a, 23b, 22) hält, deren Gesamtoberfläche 25 % kleiner als die der unteren Platte ist.

11. Flammhaltervorrichtung für Nachverbrennung nach einem der Ansprüche 9 oder 10, wobei die untere Platte (16) ein Durchgangsloch für die Einspritzung (13) und ein zylindrisches Durchgangsloch aufweist, das eine Kugelgelenkverbindung zwischen dem Lüftungsrohr (19) und dem Armhalter 8) definiert.

12. Flammhaltervorrichtung für Nachverbrennung nach einem der Ansprüche 1 bis 11 in Kombination mit Anspruch 3, wobei die seitlichen Masten (14a, 14b) zum einen und die oberen Teile (31a, 31b) zum anderen in Bezug zur Symmetrieebene des Armhalters (8) voneinander divergieren.

13. Flammhaltervorrichtung für Nachverbrennung nach Anspruch 12, wobei der Divergenzwinkel kleiner als 7° ist.

14. Flammhaltervorrichtung für Nachverbrennung nach einem der Ansprüche 12 oder 13 in Kombination mit Anspruch 4, wobei die Vorsprünge (35a, 35b) länglich sind, so dass sie ausreichend Material aufweisen, um Gegenbohrungen in den Masten (14a, 14b) gegenüber den Bohrungen (34a, 34b) zu erlauben, die in den oberen Teilen (31a, 31b) des Arms (7) ausgebildet sind.

15. Hinterer Körper eines Doppelstrom-Turbostrahltriebwerks mit Nachverbrennung, aufweisend eine Flammhaltervorrichtung nach einem der vorstehenden Ansprüche.

16. Doppelstrom-Turbostrahltriebwerk mit Nachverbrennung, aufweisend einen hinteren Körper nach Anspruch 15.

## Claims

1. Flame-holder device for an afterburner of a bypass turbojet, the said turbojet comprising a first inner annular housing (3) and a second inner annular housing (5), defining a passageway (4) for a main flow, and an outer annular housing (2) defining with the said first inner annular housing (3) a passageway (1) for a bypass flow, said device comprising at least one arm support (8) made of metal material and designed to be attached to the said outer housing (2) by means of an upper plate (9) and at least one flame-holder arm (7) consisting of a one-piece structure made of composite material comprising two joined-together walls (28a, 28b) arranged so as to define a groove having a substantially V-shaped profile, the said walls supporting on their top portion intended to be situated in the bypass flow (31a, 31b) means (34a, 34b) of attachment to the said arm support (8), said top portions (31a, 31b) being flat and positioned facing one another, the arm support (8) comprises two lateral struts (14a, 14b), the device being **characterized in that** the inside of each two lateral struts (14a, 14b) consists of a hollow cavity (24a, 24b) which leads, in the direction of the outer housing, into a top cavity (25) hollowed out of the top plate (9).

2. Flame-holder device for an afterburner according to Claim 1, in which the said attachment means are bolts (32) interfacing with pierced holes (34a, 34b) made in the said top portions, elastic washers (33) being positioned between the head of the said bolts and the bearing faces of these heads on the said top portions (31a, 31b), so as to maintain the tightness despite the differences in expansion of the composite material and of the metal.

3. Flame-holder device for an afterburner according to Claim 2, in which bosses (35a, 35b) ensure that the bolts (32) for attaching the arm (7) to the arm support (8) pass in a sealed manner through the cavities (24a, 24b) in the struts (14a, 14b).

4. Flame-holder device for an afterburner according to one of Claims 1 or 3, in which at least one pressure-tapping hole (26a, 26b) is pierced in the bottom portion of each of the struts in order to feed air to the said cavities, an orifice for letting the air out being arranged in the top portion of the said device at the outer housing (2).

5. Flame-holder device for an afterburner according to Claim 4, in which the pressure-tapping holes (26a, 26b) are fitted with a ring (27) designed to seal the air passageway between the outside of the flame-holder arm (7) and the arm support (8).

6. Flame-holder device for an afterburner according to one of Claims 4 or 5, in which the top portions (31a, 31b) of the walls (28a, 28b) comprise a hole positioned, after assembly, facing the pressure-tapping holes (26a, 26b) pierced in the bottom portion of the struts (14a, 14b).

7. Flame-holder device for an afterburner according to one of Claims 1 to 6, in which the top plate (9) comprises a pierced hole (11) for the passage of a fuel injector (13).

8. Flame-holder device for an afterburner according to Claim 7, in which the injector (13) is attached to the outer housing (2) and guided in the bottom portion by a guide shoe (29) attached to a ventilation tube (19), itself connected at the top portion by a ball pivot connection at the arm support (8).

9. Flame-holder device for an afterburner according to one of Claims 1 to 8, in which the arm support (8) comprises an intermediate plate (20) and a bottom plate (16) both capable of supporting a spray ring (6) of the afterburner system.

10. Flame-holder device for an afterburner according to Claim 9, in which the bottom plate (16) supports the inner face of the said spray ring by means of bearing faces (23a, 23b, 22) the overall surface area of which is less than 25% of that of the bottom plate.

11. Flame-holder device for an afterburner according to one of Claims 9 or 10, in which the bottom plate (16) comprises a passageway hole for the injector (13) and a cylindrical passageway hole defining a ball pivot connection between the ventilation tube (19) and the arm support (8).

12. Flame-holder device for an afterburner according to one of Claims 1 to 11, in combination with Claim 3, in which the lateral struts (14a, 14b) on the one hand, and the top portions (31a, 31b) on the other hand diverge from one another relative to the plane of symmetry of the arm support (8).

13. Flame-holder device for an afterburner according to Claim 12, in which the angle of divergence is less than 7°.

14. Flame-holder device for an afterburner according to one of Claims 12 or 13, in combination with Claim 4, in which the bosses (35a, 35b) are oblong so as to have sufficient material to allow counterbores in the struts (14a, 14b) facing the pierced holes (34a, 34b) made in the top portions (31a, 31b) of the arm (7).

15. Afterbody of a bypass turbojet with afterburner, comprising a flame-holder device according to one of the preceding claims.

16. Bypass turbojet with afterburner comprising an afterbody according to Claim 15.
